# EUROPEAN PATENT APPLICATION

(11) **EP 4 319 329 A1**
(43) Date of publication of application: **07.02.2024**
(21) Application number: 22784136.8
(22) Date of filing: 08.04.2022
(51) Int. Cl.: H04W 52/14

(54) **UPLINK POWER DETERMINATION METHOD AND DEVICE**

(30) Priority: 09.04.2021 CN 202110385160
(71) Applicant: Vivo Mobile Communication Co., Ltd., Dongguan, Guangdong 523863 (CN)
(72) Inventor: WU, Kai, Dongguan, Guangdong 523863 (CN); LI, Na, Dongguan, Guangdong 523863 (CN)
(74) Representative: Murgitroyd & Company
(86) International application number: PCT/CN2022/085772
(87) International publication number: WO 2022/214070

(57) **Abstract**

The embodiments of the present application belong to the technical field of communications. An uplink power determination method and a device are disclosed. The uplink power determination method in the embodiments of the present application includes: determining, by a terminal, an uplink power according to first information; and sending an uplink channel or an uplink signal according to the uplink power, where the first information includes at least one of the following: a transmission direction of at least one subband on a first time unit; whether a guard band is present on the first time unit; a positional relationship between an uplink transmission resource and a downlink subband or a flexible subband; the position of the uplink transmission resource in the subband; and a power control parameter.

## Description

### CROSS-REFERENCE TO RELATED APPLICATION

The present application claims priority to Chinese Patent Application No. 2021103851602, entitled "UPLINK POWER DETERMINATION METHOD AND DEVICE" filed in China National Intellectual Property Administration on April 9, 2021, which is incorporated herein by reference.

### TECHNICAL FIELD

The present application relates to the technical field of communications, and specifically relates to an uplink power determination method and a device.

### BACKGROUND

In case of network full duplex or flexible duplex, in order to avoid interference between uplink and downlink, a guard band is usually introduced between an uplink subband and a downlink subband, so as to avoid interference between uplink and downlink.

Even though there is a guard band between subbands, a signal sent by a terminal at subband may be leaked to other subbands due to leakage, such as inband emission. For example, a terminal which performs uplink transmission may interfere with the downlink reception of other terminals.

In consideration of cross link interference (Cross Link Interference, CLI), the uplink power determination method in related technology cannot meet the needs of use. Therefore, it is necessary to provide a new uplink power determination method, so as to perform certain restrictions on the uplink power of a terminal on an uplink subband.

### SUMMARY OF THE INVENTION

An uplink power determination method and a device are provided in the embodiments of the present application, which provide a new solution for a terminal on how to determine the uplink power.

According to a first aspect, an uplink power determination method is provided, including: determining, by a terminal, an uplink power according to first information; and sending an uplink channel or an uplink signal according to the uplink power. The first information includes at least one of the following: the transmission direction of at least one subband on a first time unit; whether a guard band is present on the first time unit; a positional relationship between an uplink transmission resource and a downlink subband or a flexible subband; the position of the uplink transmission resource in the subband; and a power control parameter.

According to a second aspect, an uplink power determination method is provided, including: a network side device sending configuration information. The configuration information is used for configuring a power control parameter, the power control parameter is used for a terminal to determine an uplink power, and each subband or each subband set is configured with its own power control parameters.

According to a third aspect, an uplink power determination apparatus is provided, including: a power determination module, configured to determine an uplink power according to first information; and a transmission module, configured to send an uplink channel or an uplink signal according to the uplink power. The first information includes at least one of the following: the transmission direction of at least one subband on a first time unit; whether a guard band is present on the first time unit; a positional relationship between an uplink transmission resource and a downlink subband or a flexible subband; the position of the uplink transmission resource in the subband; and a power control parameter.

According to a fourth aspect, an uplink power determination apparatus is provided, including: a transmission module, configured to send configuration information. The configuration information is used for configuring a power control parameter, the power control parameter is used for a terminal to determine an uplink power, and each subband or each subband set is configured with its own power control parameters.

According to a fifth aspect, a terminal is provided, including a processor, a memory, and a program or an instruction stored in the memory and executable on the processor. When the program or the instruction is executed by the processor, the method according to the first aspect is implemented.

According to a sixth aspect, a terminal is provided, including a processor and a communication interface, and the processor is configured to determine an uplink power according to first information, and the communication interface is configured to send an uplink channel or an uplink signal according to the uplink power; and the first information includes at least one of the following: the transmission direction of at least one subband on a first time unit; whether a guard band is present on the first time unit; a positional relationship between an uplink transmission resource and a downlink subband or a flexible subband; the position of the uplink transmission resource in the subband; and a power control parameter.

According to a seventh aspect, a network side device is provided, including a processor, a memory, and a program or an instruction stored in the memory and executable on the processor. When the program or the instruction is executed by the processor, the method according to the second aspect is implemented.

According to an eighth aspect, a network side device is provided, including a processor and a communication interface. The communication interface is configured to send configuration information; and the configuration information is used for configuring a power control parameter, the power control parameter is used for a terminal to determine an uplink power, and each subband or each subband set is configured with its own power control parameters.

According to a ninth aspect, a readable storage medium is provided. The readable storage medium stores a program or an instruction, and when executed by a processor, the program or the instruction implements the method according to the first aspect, or the method according to the second aspect.

According to a tenth aspect, a chip is provided, including a processor and a communication interface, the communication interface is coupled to the processor, and the processor is configured to run a program or an instruction to implement the method according to the first aspect, or the method according to the second aspect.

According to an eleventh aspect, a computer program/program product is provided. The computer program/program product is stored in a non-transient storage medium, and the program/program product is executed by at least one processor so as to implement the method according to the first aspect, or the method according to the second aspect.

In the embodiments of the present application, a terminal determines an uplink power according to first information. The first information includes at least one of the following: the transmission direction of at least one subband on a first time unit; whether a guard band is present on the first time unit; a positional relationship between an uplink transmission resource and a downlink subband or a flexible subband; the position of the uplink transmission resource in the subband; and a power control parameter. In the embodiments of the present application, the transmission power can be determined according to the specific situation of a subband, which facilitates reducing cross link interference in a system, thus improving the performance of a communication system.

### BRIEF DESCRIPTION OF THE DRAWINGS

FIG. 1 is a schematic diagram of a wireless communication system according to an embodiment of the present application;
FIG. 2 is a schematic flowchart of an uplink power determination method according to an embodiment of the present application;
FIG. 3 is a schematic diagram of subbands on a time unit according to an embodiment of the present application;
FIG. 4 is a schematic diagram of subbands on a time unit according to an embodiment of the present application;
FIG. 5 is a schematic diagram illustrating the application of an uplink power determination method according to an embodiment of the present application;
FIG. 6 is a schematic diagram illustrating the application of an uplink power determination method according to an embodiment of the present application;
FIG. 7 is a schematic diagram illustrating the application of an uplink power determination method according to an embodiment of the present application;
FIG. 8 is a schematic diagram illustrating the application of an uplink power determination method according to an embodiment of the present application;
FIG. 9 is a schematic flowchart of an uplink power determination method according to an embodiment of the present application;
FIG. 10 is a schematic structural diagram of an uplink power determination apparatus according to an embodiment of the present application;
FIG. 11 is a schematic structural diagram of an uplink power determination apparatus according to an embodiment of the present application;
FIG. 12 is a schematic structural diagram of a communication device according to an embodiment of the present application;
FIG. 13 is a schematic structural diagram of a terminal according to an embodiment of the present application; and
FIG. 14 is a schematic structural diagram of a network side device according to an embodiment of the present application.

### DETAILED DESCRIPTION

The technical solutions in embodiments of the present application are clearly described in the following with reference to the accompanying drawings in the embodiments of the present application. Apparently, the described embodiments are some rather than all of the embodiments of the present application. All other embodiments obtained by a person skilled in the art based on the embodiments of the present application fall within the protection scope of the present application.

In the specification and claims of the present application, the terms "first", "second" and so on are used to distinguish similar objects, but are unnecessarily used to describe a specific sequence or a precedence order. It is to be understood that terms used in this way are exchangeable in a proper case, so that the embodiments of the present application can be implemented in an order other than those illustrated or described here. In addition, objects distinguished by the terms "first" and "second" are usually of the same class, and the number of objects are not limited by the terms, for example, the number of first objects can be one or multiple. In addition, "and/or" in the specification and claims refers to at least one of the connected objects, and the character "/" generally indicates an "or" relationship between the associated objects.

It is worth noting that the technologies described in embodiments of the present application are not limited to the long term evolution (Long Term Evolution, LTE)/LTE-advanced (LTE-Advanced, LTE-A) system, and may further be applied to various wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single carrier frequency division multiple access (Single Carrier Frequency Division Multiple Access, SC-FDMA), and other systems. The terms "system" and "network" in embodiments of the present application are often used in an interchangeable manner, and the technology described therein can be applied to the systems and radio technologies mentioned above, and can also be applied to other systems and radio technologies. In the following description, for the purpose of demonstration, a new radio (New Radio, NR) system is described, and NR terms are used in most of the following descriptions. These technologies can also be applied to applications other than NR system applications, such as a 6th generation (6th Generation, 6G) communication system.

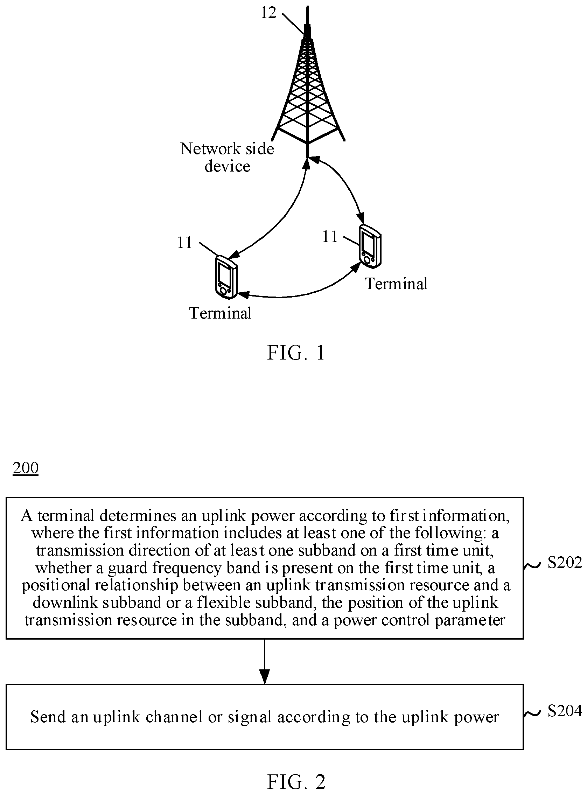

FIG. 1 is a schematic diagram of a wireless communication system which can be applied in the embodiments of the present application. The wireless communication system includes a terminal 11 and a network side device 12. The terminal 11 may also be referred to as a terminal device or a user equipment (User Equipment, UE). The terminal 11 may be terminal side device, such as a mobile phone, a tablet computer (Tablet Computer), a laptop computer (Laptop Computer), which is also called a notebook computer, a personal digital assistant (Personal Digital Assistant, PDA), a palm computer, a netbook, an ultra-mobile personal computer (ultra-mobile personal computer, UMPC), a mobile Internet device (Mobile Internet Device, MID), a wearable device (Wearable Device) or a vehicle user equipment (VUE), and a pedestrian user equipment (PUE). The wearable device includes: a smart watch, bracelet, earphones, glasses, etc. the specific type of the terminal 11 is not limited in the embodiments of the present application. A network side device 12 may be a base station or a core network. The base station may be referred to as a node B, an evolved node B, an access point, a base transceiver station (Base Transceiver Station, BTS), a radio base station, a radio transceiver, a basic service set (Basic Service Set, BSS), an extended service set (Extended Service Set, ESS), a B node, an evolved node B (eNB), a next generation node B (gNB), a home node B, a home evolved node B, a WLAN access point, a WiFi node, and a transmitting receiving point (Transmitting Receiving Point, TRP) or other suitable terms in the art. As long as the same technical effect is achieved, the base station is not limited to the specific technical terms. Only a base station in a NR system is used as an example in the embodiments of the present application, but a specific type of the base station is not limited.

With reference to the accompanying drawings, a detailed description is made, by means of some embodiments and the application scenario thereof, to an uplink power determination method and a device provided by the embodiments of the present application.

As shown in FIG. 2, an uplink power determination method 200 is provided in the embodiments of the present application. The method may be executed by a terminal. In other words, the method can be executed by software and hardware installed on the terminal. The method includes the following step:

S202: A terminal determines an uplink power according to first information. The first information includes at least one of the following: the transmission direction of at least one subband on a first time unit; whether a guard band is present on the first time unit; a positional relationship between an uplink transmission resource and a downlink subband or a flexible subband; the position of the uplink transmission resource in the subband; and a power control parameter.

In an example, first information includes the transmission direction of at least one subband on a first time unit, and/or whether a guard band is present on the first time unit. The transmission direction of the subband may include downlink (D), uplink (U), or flexible (flexible, F), and a first time unit may include at least one symbol, at least one slot, at least one sub-slot or at least one sub-frame.

For example, in a case that a plurality of subbands are present on the first time unit and the plurality of subbands include a downlink or a flexible subband, and/or a guard band is present on the first time unit, a terminal determines to use a second transmission power. The second transmission power is less than or equal to a first transmission power, and the first transmission power may be the transmission power determined according to the uplink power determination method in the related technologies.

In this example, the second transmission power used by a terminal is less than or equal to the first transmission power. That is, in this example, a transmission power is reduced so as to avoid the interference of uplink transmission with the reception of other terminals on a downlink subband, thus improving the performance of a communication system.

In another example, first information includes a positional relationship between an uplink transmission resource and a downlink subband or a flexible subband. In S202, if the frequency interval between the subband in which the uplink transmission resource is located and a downlink subband or a flexible subband is less than or equal to a preset frequency threshold, a third transmission power is determined to be used. The third transmission power is less than or equal to a first transmission power.

In this example, the third transmission power used by a terminal is less than or equal to the first transmission power. That is, in this example, the transmission power is reduced, so as to avoid the interference of uplink transmission with the reception of other terminals on a downlink subband, thus improving the performance of a communication system.

In another example, first information includes the position of an uplink transmission resource in a subband. In S202, if the uplink transmission resource includes at least one resource block of an edge of a subband or at least one resource element of the edge of the subband, a fourth transmission power is determined to be used. The fourth transmission power is less than or equal to a first transmission power.

In this example, the fourth transmission power used by a terminal is less than or equal to the first transmission power. That is, in this example, the transmission power is reduced, so as to avoid the interference of uplink transmission with the reception of other terminals on a downlink subband, thus improving the performance of a communication system.

In another example, first information includes a power control parameter. In S202, a terminal can determine an uplink power according to the power control parameter.

As mentioned above, first information includes at least one of the following five types of information 1) to 5): 1) the transmission direction of at least one subband on a first time unit; 2) whether a guard band is present on the first time unit; 3) a positional relationship between an uplink transmission resource and a downlink subband or a flexible subband; 4) the position of the uplink transmission resource in the subband; and 5) a power control parameter.

In a plurality of examples mentioned above, one or two of the above-mentioned five types of information is taken as an example to introduce how a terminal determines an uplink power. Actually, a terminal also can determine an uplink power according to a combination of two, three, fourth or five types of information.

For example, a terminal determines an uplink power according to 4) the position of the uplink transmission resource in the subband and 5) a power control parameter. Also, a terminal determines an uplink power according to 2) whether a guard band is present on the first time unit, 3) a positional relationship between an uplink transmission resource and a downlink subband or a flexible subband, and 5) a power control parameter.

S204: Send an uplink channel or an uplink signal according to the uplink power.

In this example, a terminal can send an uplink channel or an uplink signal on an uplink subband according to the determined uplink power. The uplink channel may include a physical random access channel (Physical Random Access Channel, PRACH), a physical uplink control channel (Physical Uplink Control Channel, PUCCH), a physical uplink shared channel (Physical Uplink Shared Channel, PUSCH), etc.; and the uplink signal may include a sounding reference signal (Sounding Reference Signal, SRS).

According to an uplink power determination method provided by the embodiments of the present application, a terminal determines an uplink power according to first information. The first information includes at least one of the following: the transmission direction of at least one subband on a first time unit; whether a guard band is present on the first time unit; a positional relationship between an uplink transmission resource and a downlink subband or a flexible subband; the position of the uplink transmission resource in the subband; and a power control parameter. In the embodiments of the present application, the transmission power can be determined according to the specific situation of a subband, which facilitates reducing cross link interference in a system, thus improving the performance of a communication system.

The method 200, it is mentioned that a terminal determines an uplink power according to first information, which will be illustrated by combining with a few specific examples. Before the specific examples are introduced, first of all, the time unit, subband, guard band, etc. mentioned in each embodiment of the present application are introduced.

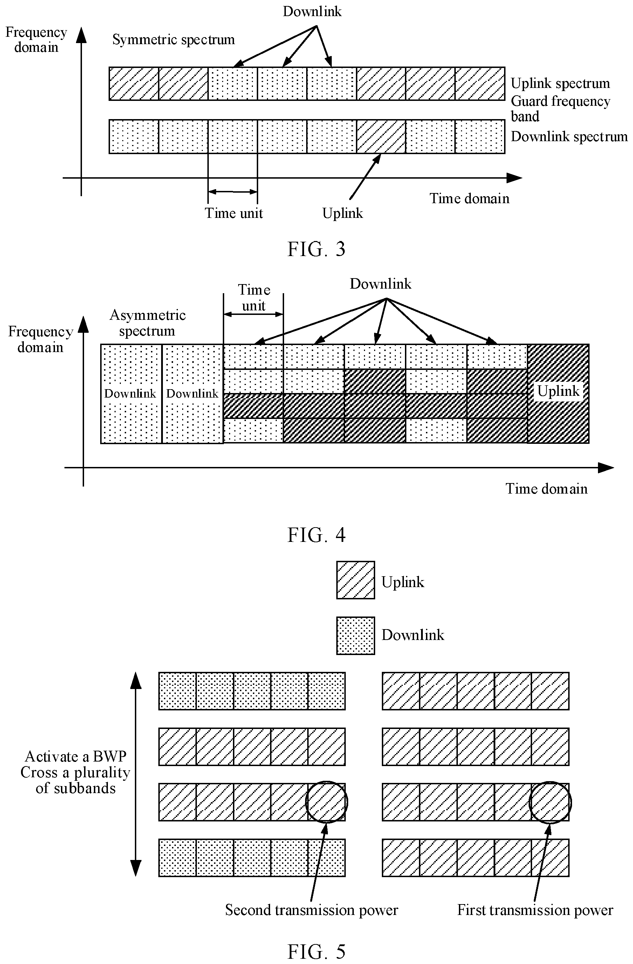

As shown in FIG. 3, FIG. 3 schematically illustrates a spectrum diagram when a network side device is flexible/full duplex. FIG. 3 illustrates the symmetric spectrum of frequency division duplexing (Frequency Division Duplexing, FDD). An uplink or downlink spectrum of FDD can be semi-statically configured or dynamically indicated as downlink or uplink transmission on certain time units (such as slot/symbol).

For example, on the third to fifth time unit, an uplink spectrum is configured as downlink; and on the sixth time unit, a downlink spectrum is configured as uplink. FIG. 3 schematically illustrates two subbands, but actually, the number of subbands is not limited by this. In addition, on the frequency domain direction, a guard band is further provided between these subbands.

As shown in FIG. 4, FIG. 4 schematically illustrates a spectrum diagram when a network side device is flexible/full duplex. FIG. 4 illustrates the asymmetric spectrum of time division duplexing (Time Division Duplexing, TDD). The different frequency domain resources on certain time units (such as slot/symbol) of TDD can be semi-statically configured or dynamically indicated as both uplink transmission and downlink reception.

As shown in the third to seventh time unit in FIG. 4, there are both uplink subband and downlink subband on these five time units. FIG. 4 schematically illustrates four subbands, but actually, the number of subbands is not limited by this. In addition, on the frequency domain direction, a guard band can be further provided between these subbands. FIG. 4 does not illustrate the guard band.

For the above-mentioned symmetric spectrum and asymmetric spectrum, before S202, a terminal also can receive indication information. The indication information is used for notifying which time unit a terminal is located on, that is, which slot/symbol the terminal is located on, and which frequency the terminal is located on, that is, which subband, sub-carrier (sub-carrier), which transmission/reception direction of a resource block (RB), that is, whether uplink (U), downlink (D) or (flexible).

The indication information may be high-layer signaling, or media access control-control element (Media Access Control-Control Element, MAC CE) signaling, and may also be downlink control information (Downlink Control Information, DCI).

In each embodiment of the present application, a subband may include one or more resource blocks (Resource Block, RB), and the one or more resource blocks may also be referred to as a resource block set (RB set). The subband mentioned in each embodiment of the present application may represent a plurality of successive RBs, and therefore the subband may also be described by an RB set. The guard band mentioned in each embodiment of the present application represents frequency domain resources where a terminal does not perform signal/channel transmission or reception, and the frequency domain resources may be described by the number of RBs/resource elements (Resource Element, RE) and the position of RB/RE, or a frequency range.

For different time units (such as a slot/symbol/subframe), the direction configuration of a subband may be different, and the size of the subband may also be different. A first time unit in each embodiment of the present application can be one or more determined time units, and the "first" therein is for convenience only and does not represent other specific meanings.

### Example 1:

First information includes the transmission direction of at least one subband on the first time unit, and/or whether a guard band is present on the first time unit. The step of determining, by a terminal an uplink power according to first information includes: if the first time unit includes a downlink subband or a flexible subband, and/or the guard band is present on the first time unit, determining to use a second transmission power. The second transmission power is less than or equal to a first transmission power.

For a case where first information includes whether a guard band is present on a first time unit, optionally, the first information can be specifically replaced by the size of the guard band on the first time unit.

The first transmission power includes at least one of the following:
1) a transmission power when all the subbands on the first time unit are uplink subbands or flexible subbands;
2) a transmission power when no downlink subband or guard band exist on the first time unit;
3) a transmission power when the first time unit is an uplink time unit; and
4) a transmission power determined according to a power control parameter configured by an uplink bandwidth part (BandWidth Part, BWP).

The second transmission power mentioned above is less than or equal to a first transmission power, and optionally the second transmission can be obtained by subtracting a preset value from the first transmission power.

Optionally, the difference between the second transmission power and the first transmission power is determined based on at least one of 1) to 4) below:
1) a preset value or a preset value range;
2) a value configured or indicated by a network side device;
3) a value determined according to quantity and/or position of downlink subbands or the flexible subbands; and
4) a value is determined according to the size of the guard band.

In this example, the second transmission power used by a terminal is less than or equal to the first transmission power. That is, in this example, a transmission power is reduced so as to avoid the interference of uplink transmission with the reception of other terminals on a downlink subband, thus improving the performance of a communication system.

### Example 2:

First information includes a positional relationship between an uplink transmission resource and a downlink subband or a flexible subband. The step of determining, by a terminal an uplink power according to first information includes: if the frequency interval between a subband in which the uplink transmission resource is located and a downlink subband or a flexible subband is less than or equal to a preset frequency threshold, determining to use a third transmission power. The third transmission power is less than or equal to a first transmission power.

In this example, if there is a downlink or flexible subband on a first time unit, and the frequency interval between a subband which is sent by a terminal and a downlink subband is less than or equal to a preset frequency threshold, using a third transmission power for transmission.

Optionally, the frequency interval includes one of the following: at least one sub-carrier, at least one resource block, at least one subband, and the absolute frequency width.

The first transmission power can be referred to the introduction of the previous embodiment.

As mentioned above, the third transmission power is less than or equal to a first transmission power, and optionally, the third transmission power can be obtained by subtracting the first transmission power from a preset value.

Optionally, the difference between the third transmission power and the first transmission power is determined based on at least one of 1) to 4) below:
1) a preset value or a preset value range;
2) a value configured or indicated by a network side device;
3) a value determined according to quantity and/or position of downlink subbands or the flexible subbands; and
4) a value is determined according to the size of the guard band.

In this example, the third transmission power used by a terminal is less than or equal to the first transmission power. That is, in this example, a transmission power is reduced so as to avoid the interference of uplink transmission with the reception of other terminals on a downlink subband, thus improving the performance of a communication system.

### Example 3:

First information includes the position of the uplink transmission resource in the subband. The step of determining, by a terminal an uplink power according to first information includes: if the uplink transmission resource includes at least one resource block of an edge of a subband or at least one resource element of the edge of the subband, determining to use a fourth transmission power. The fourth transmission power is less than or equal to a first transmission power.

In this example, if a frequency domain resource of uplink transmission includes X RBs or REs of the edge of the subband, the terminal uses a fourth transmission power for transmission. X is a positive integer.

The first transmission power can be referred to the introduction of the previous embodiment.

As mentioned above, the fourth transmission power is less than or equal to a first transmission power, and optionally, the fourth transmission power can be obtained by subtracting the first transmission power from a preset value.

Optionally, the difference between the fourth transmission power and the first transmission power is determined based on at least one of 1) to 4) below:
1) a preset value or a preset value range;
2) a value configured or indicated by a network side device;
3) a value determined according to quantity and/or position of downlink subbands or the flexible subbands; and
4) a value is determined according to the size of the guard band.

In this example, the fourth transmission power used by a terminal is less than or equal to the first transmission power. That is, in this example, a transmission power is reduced so as to avoid the interference of uplink transmission with the reception of other terminals on a downlink subband, thus improving the performance of a communication system.

### Example 4:

In this embodiment, first information includes a power control parameter. In S202, a terminal can determine an uplink power according to the power control parameter.

Optionally, the power control parameter includes at least one of the following: a maximum transmission power; a target receiving power of an open loop power control parameter; a path loss compensation factor; a path loss reference signal; and a power adjustment value. The power adjustment value may include a power compensation value or a power back-off value.

Optionally, before the determining, by a terminal an uplink power according to first information, the method further includes: receiving configuration information. The configuration information is used for configuring the power control parameter, and each subband or each subband set is configured with its own power control parameter. That is, a network side device configures the specific (specific) power control parameter of a subband or subband set, and a terminal determines a transmission power according to the specific power control parameter of the subband.

In order to explain in detail an uplink power determination method provided by the embodiments of the present application, several specific embodiments will be illustrated below.

In FIG. 5 to FIG. 8, the horizontal direction refers to the time domain direction, and the vertical direction refers to the frequency domain direction. The squares filled with slashes represent uplink, and the squares filled with small black dots represent downlink. The time domain length of each square can be regarded as one time slot. In FIG. 5, it can be considered that there are two time units (that is, five squares make up a time unit), or it can also be considered that each square represents a time unit. In FIG. 5, it can be considered that there are four subbands on the frequency domain, and a guard band is present between subbands.

### Embodiment 1

In this embodiment, a terminal determines a transmission power according to subband/guard band configuration.

As shown in FIG. 5, in this embodiment, when at least one of the following conditions is met, a terminal reduces the transmission power, that is, the terminal uses the second transmission power.

Condition one: if there are a plurality of subbands on a time unit, and there are downlink or flexible subbands in the plurality of subbands.

### Condition two: there is a guard band on the time unit.

When at least one of the above-mentioned conditions is met, the terminal uses the second transmission power. Compared to a first transmission power, a second transmission power value is reduced by delta, and the delta is a preset value or value indicated by the network side device. The first transmission power can be referred to the introduction of the previous embodiment.

### Embodiment 2

In this embodiment, a terminal determines a transmission power according to the positional relationship between uplink transmission and a downlink subband.

In this embodiment, if there is a downlink or flexible subband on the time unit, and the frequency interval between the subband which is sent by the terminal and the downlink subband is less than the preset threshold, the third transmission power is used for transmission.

The frequency interval may be X sub-carriers, RBs, subbands, or the absolute frequency width. The third transmission power is less than or equal to the first/second transmission power.

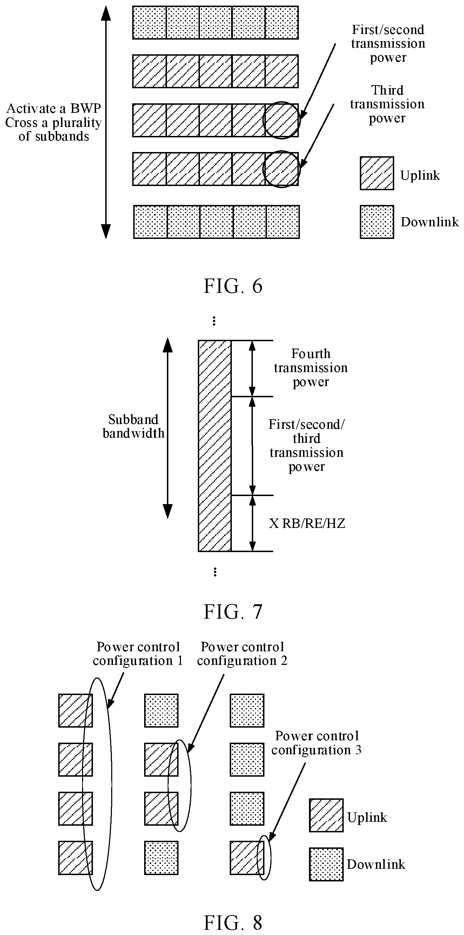

As shown in FIG. 6, there are a plurality of uplink subbands in a carrier or BWP, and the frequency interval between some subbands and a downlink/flexible subband is relatively large, and the frequency interval of others is relatively small. In one implementation, if a subband adjacent to the subband in which a transmission signal is located includes a downlink or flexible subband, a third transmission power is used. The third transmission power is less than or equal to a first/second transmission power. The first/second transmission power can be referred to the introduction of the previous embodiment.

### Embodiment 3

In this embodiment, a terminal determines a transmission power according to the specific transmission position in the subband.

In this embodiment, a terminal determines a transmission power of the terminal according to the position of frequency domain resource of uplink transmission in a subband.

If a frequency domain resource of uplink transmission includes X RBs or REs of the edge of the subband, the terminal uses a fourth transmission power for transmission. The fourth transmission power is less than or equal to a first transmission power. As shown in FIG. 7, within the bandwidth of a subband, if a terminal transmits a signal in the edge region of the subband, or at least part of resources overlaps with the frequency domain range, the terminal is to reduce the transmission power and use a fourth transmission power.

In embodiments 1-3 mentioned above, after a terminal determines a relative power difference, the actual sent power can be represented by the following formula:
for example, with regard to a PUSCH, *P*_{PUSCH*,f,c,x*}(*i,j,q_{d},l*) = *P*_{PUSCH,*f,c,y*}(*i,j,q_{d},l*) - *delta.* x>y, both x and y are integers greater than 1, and y can be equal to 1. *P*_{PUSCH*,f,c,*1} corresponds to the above-mentioned first transmission power, and x can be equal to 2, 3 and 4, which respectively correspond to the second/third/fourth transmission power.

Or in the related art, the transmission power of a terminal is determined by means of taking the smaller value of the two, that is,*P*_{PUSCH*,f,c*}(*i,j,q_{d},l*) = min{*P*_{CMAX,*f,c*}(*i*), *P̃*_{PxxCH,*f,c*}}, the above-mentioned power back-off value *delta* can be the back-off of at least one of *P*_{CMAX*,f,c*}(*i*), *P̃*_{PxxCH*,f,c*}, such as *P*_{PUSCH,*f,c*}(*i,j,q_{d},l*) = min{*P*_{CMAX*,f,c*}(*i*) - *delta*, *P̃*_{PxxCH,*f,c*}} or *P*_{PUSCH*,f,c*}(*i,j,q_{d},l*) = min{*P*_{CMAX,*f,c*}(*i*), *P̃*_{PxxCH,*f,c*} - *delta*}.

A transmission power determination method of an SRS, PUCCH and PRACH are similar.

### Embodiment 4

In this embodiment, a network side device configures a power control parameter for each subband or each subband set.

In the embodiments of the present application, a power control parameter can be configured by per BWP. When a plurality of subbands configured within a BWP are introduced, a network side device can also configure the specific power control parameter for per subband (subband combination), and a terminal determines a transmission power according to the specific power control parameter of the subband (combination).

For example, a transmission power on the specific subband (combination) is reduced by means of configuring the relatively small target receiving power value of an open loop power control parameter or changing the configuration of a path loss compensation factor.

As shown in FIG. 8, different subband combinations configure different power control configurations, and a terminal adaptively determines the applicable power control parameter according to the uplink, downlink, and flexible subband on the current time unit.

This embodiment and embodiments 1 and 2 have the same technical effects. In embodiments 1 and 2, the adjustment of a transmission power is performed according to a preset rule, whereas a new power control parameter configuration method is provided in an embodiment 4. A terminal determines a transmission power on per subband according to the configuration of a new power control parameter, that is, the function of controlling cross link interference is handled to the network configuration for implementation.

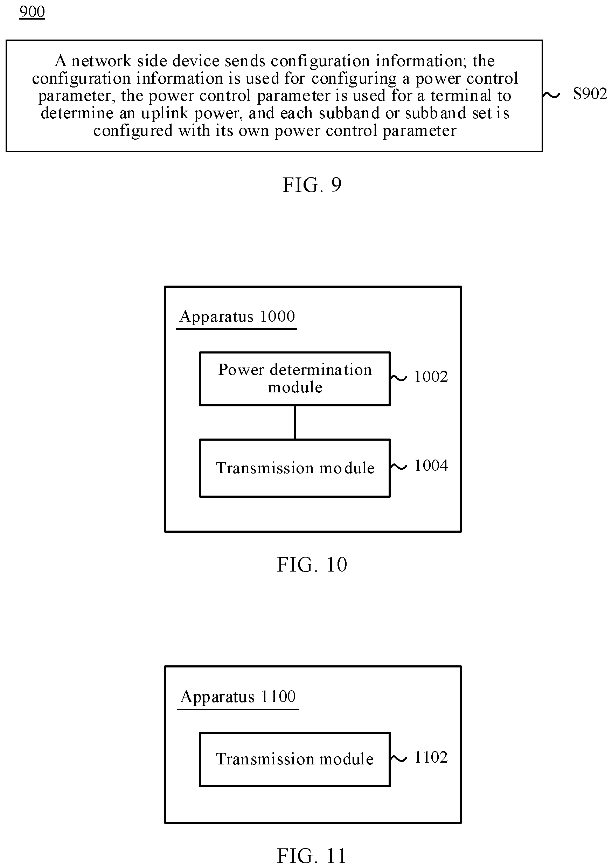

In conjunction with FIG. 2, an uplink power determination method is described in detail according to an embodiment of the present application. In the following, an uplink determination method of another embodiment of the present application is described in detail in conjunction with FIG. 9. It can be understood that the interaction between a network side device and a terminal, which is described from the network side device, is the same as the description of a terminal side in the method as shown in FIG. 2. The relevant description is omitted appropriately in order to avoid duplication.

FIG. 9 is a schematic diagram of an implementation process of an uplink determination method according to an embodiment of the present application, and the method can be applied to a network side device. As shown in FIG. 9, the method 900 includes the following step:

S902: A network side device sends configuration information. The configuration information is used for configuring a power control parameter, the power control parameter is used for a terminal to determine an uplink power, and each subband or each subband set is configured with its own power control parameter.

In the embodiments of the present application, a network side device sends configuration information. The configuration information is used for configuring a power control parameter, the power control parameter is used for a terminal to determine an uplink power, and each subband or each subband set is configured with its own power control parameter. In the embodiments of the present application, a transmission power can be determined according to the specific situation of a subband, which facilitates reducing the cross link interference in a system, thus improving the performance of a communication system.

Optionally, as an embodiment, the method 900 further includes: a network side device receiving an uplink channel or an uplink signal. The transmission power of the uplink channel or the uplink signal is determined on the basis of a power control parameter in configuration information.

Optionally, as an embodiment, the power control parameter includes at least one of the following: a maximum transmission power; a target receiving power of an open loop power control parameter; a path loss compensation factor; a path loss reference signal; and a power adjustment value.

In an uplink power determination method provided in the embodiments of the present application, the execution body may be an uplink power determination apparatus, or a control module, configured to perform the uplink power determination method, in the uplink power determination apparatus. In the embodiments of the present application, an uplink power determination apparatus provided in the embodiments of the present application is illustrated by taking an example that the uplink power determination apparatus executes the uplink power determination method.

FIG. 10 is a schematic structural diagram of an uplink power determination apparatus in the embodiments of the present application. The apparatus can correspond to a terminal in other embodiments. As shown in FIG. 10, the apparatus 1000 includes the following module:
a power determination module 1002, which may be configured to determine an uplink power according to first information.

The first information includes at least one of the following: the transmission direction of at least one subband on a first time unit; whether a guard band is present on the first time unit; a positional relationship between an uplink transmission resource and a downlink subband or a flexible subband; the position of the uplink transmission resource in the subband; and a power control parameter.

The apparatus further includes a transmission module 1004, which may be configured to send an uplink channel or an uplink signal according to the uplink power.

In the embodiments of the present application, an apparatus determines an uplink power according to first information. The first information includes at least one of the following: the transmission direction of at least one subband on a first time unit; whether a guard band is present on the first time unit; a positional relationship between an uplink transmission resource and a downlink subband or a flexible subband; the position of the uplink transmission resource in the subband; and a power control parameter. In the embodiments of the present application, a transmission power can be determined according to the specific situation of a subband, which facilitates reducing the cross link interference in a system, thus improving the performance of a communication system.

Optionally, as an embodiment, the power determination module 1002 can be configured to: if the first time unit includes a downlink subband or a flexible subband, and/or the guard band is present on the first time unit, determine to use a second transmission power. The second transmission power is less than or equal to a first transmission power.

Optionally, as an embodiment, the power determination module 1002 can be configured to: if the frequency interval between a subband in which the uplink transmission resource is located and a downlink subband or a flexible subband is less than or equal to a preset frequency threshold, determine to use a third transmission power. The third transmission power is less than or equal to a first transmission power.

Optionally, as an embodiment, the frequency interval includes one of the following: at least one sub-carrier, at least one resource block, at least one subband, and the absolute frequency width.

Optionally, as an embodiment, the power determination module 1002 can be configured to: if the uplink transmission resource includes at least one resource block of an edge of a subband or at least one resource element of the edge of a subband, determine to use a fourth transmission power. The fourth transmission power is less than or equal to a first transmission power.

Optionally, as an embodiment, the first transmission power includes at least one of the following: a transmission power when all the subbands on the first time unit are uplink subbands or flexible subbands; a transmission power when no downlink subband or guard band exist on the first time unit; a transmission power when the first time unit is an uplink time unit; and a transmission power determined according to a power control parameter configured by an uplink BWP.

Optionally, as an embodiment, the difference between at least one of the second transmission power, the third transmission power and the fourth transmission power and the first transmission power is determined based on at least one of the following: a preset value or a preset value range; a value configured or indicated by a network side device; a value determined according to the number and/or position of the downlink subbands or flexible subbands; and a value determined according to the size of a guard band.

Optionally, as an embodiment, the power control parameter includes at least one of the following: a maximum transmission power; a target receiving power of an open loop power control parameter; a path loss compensation factor; a path loss reference signal; and a power adjustment value.

Optionally, as an embodiment, the transmission module 1004 is further configured to: receive configuration information. The configuration information is used for configuring the power control parameter, and each subband or each subband set is configured with its own power control parameter.

Optionally, as an embodiment, the uplink channel includes one of the following: an PRACH, a PUCCH, and a PUSCH, and the uplink signal includes an SRS.

The process of how the apparatus 1000 in the embodiments of the present application executes the corresponding method may refer to the process of the method 200 corresponding to the embodiments of the present application. In addition, various units/modules in the apparatus 1000 and the above-mentioned other operations and/or functions respectively implement the corresponding process in the method 200, and the same or equivalent technical effects can be achieved, which will not be described in detail herein again to avoid repetition.

An uplink power determination apparatus in the embodiments of the present application may be an apparatus or electronic device provided with an operating system, or may be a component, an integrated circuit or a chip in a terminal. The apparatus or electronic device may be a mobile terminal or may be a non-mobile terminal. For example, the mobile terminal may include but is not limited to the types of a terminal 11 listed above, and the non-mobile terminal may be a server, network attached storage (Network Attached Storage, NAS), personal computer (personal computer, PC), television (television, TV), teller machine or self-service machine, etc., which are not specified in embodiments of the present application.

An uplink power determination apparatus provided in the embodiments of the present application can implement each process implemented by method embodiments of FIG. 2 to FIG. 9, and the same technical effects can be achieved, which will not be described in detail herein again to avoid repetition.

FIG. 11 is a schematic structural diagram of an uplink power determination apparatus in the embodiments of the present application, and the apparatus can correspond to a network side device in other embodiments. As shown in FIG. 11, the apparatus 1100 includes the following module:
a transmission module 1102, which may be configured to send configuration information. The configuration information is used for configuring a power control parameter, the power control parameter is used for a terminal to determine an uplink power, and each subband or each subband set is configured with its own power control parameter.

In the embodiments of the present application, an apparatus 1100 sends configuration information. The configuration information is used for configuring a power control parameter, the power control parameter is used for a terminal to determine an uplink power, and each subband or each subband set is configured with its own power control parameter. In the embodiments of the present application, a transmission power can be determined according to the specific situation of a subband, which facilitates reducing the cross link interference in a system, thus improving the performance of a communication system.

Optionally, as an embodiment, the power control parameter includes at least one of the following: a maximum transmission power; a target receiving power of an open loop power control parameter; a path loss compensation factor; a path loss reference signal; and a power adjustment value.

Optionally, as an embodiment, an apparatus 1100 may also include other transmission modules, which are configured to receive an uplink channel or an uplink signal. The transmission power of the uplink channel or the uplink signal is determined on the basis of a power control parameter in configuration information.

The process of how the apparatus 1100 in the embodiments of the present application execute the corresponding method may refer to the process of the method 900 corresponding to the embodiments of the present application. In addition, various units/modules in the apparatus 1100 and the above-mentioned other operations and/or functions respectively implement the corresponding process in the method 900, and the same technical effects can be achieved, which will not be described in detail herein again to avoid repetition.

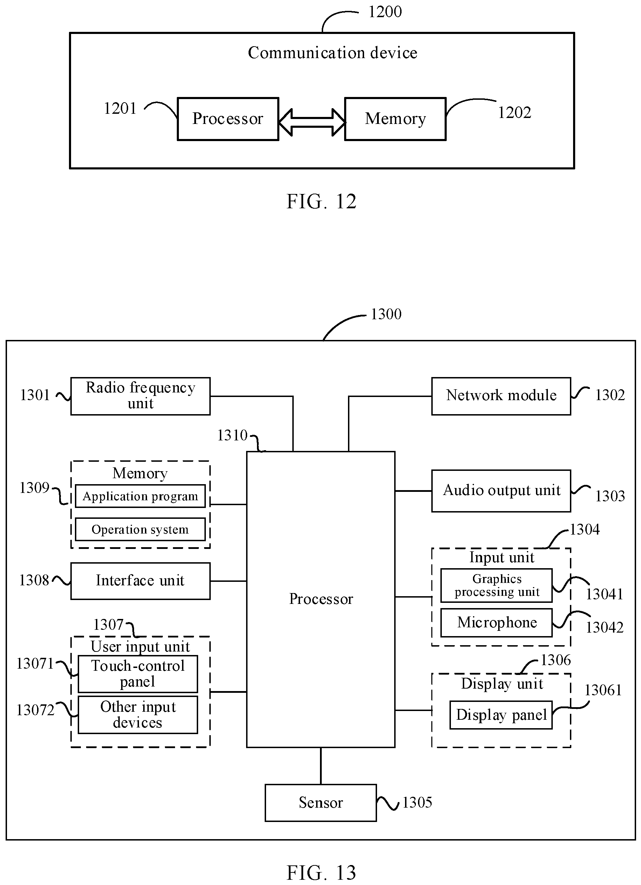

Optionally, as shown in FIG. 12, a communication device 1200 is further provided in the embodiments of the present application, including a processor 1201, a memory 1202, and a program or an instruction which is stored in the memory 1202 and executable on the processor 1201. For example, when the communication device 1200 is a terminal, various processes of the above-mentioned method embodiments are implemented when the program or instruction is executed by the processor 1201, and the same technical effects can be achieved. When the communication device 1200 is a network side device, the various processes of the above-mentioned method embodiments are implemented when the program or instruction is executed by the processor 1201, and the same technical effects can be achieved. For the sake of brevity, the details are omitted here.

A terminal is further provided in the embodiments of the present application, including a processor and a communication interface. The processor is configured to determine an uplink power according to first information, and the communication interface is configured to send an uplink channel or an uplink signal according to the uplink power. The first information includes at least one of the following: the transmission direction of at least one subband on a first time unit; whether a guard band is present on the first time unit; a positional relationship between an uplink transmission resource and a downlink subband or a flexible subband; the position of the uplink transmission resource in the subband; and a power control parameter. The terminal embodiment corresponds to the above-mentioned terminal-side method embodiment. Various implementation processes and implementation methods of the above-mentioned method embodiments can all be applied to the terminal embodiments, and the same technical effects can be achieved. Specifically, FIG. 13 is a schematic diagram of a hardware structure of a terminal for implementing the embodiments of the present application.

The terminal 1300 includes but is not limited to: at least part of components in a radio frequency unit 1301, a network module 1302, an audio output unit 1303, an input unit 1304, a sensor 1305, a display unit 1306, a user input unit 1307, an interface unit 1308, a memory 1309, and a processor 1310.

A person skilled in the art may understand that a terminal 1300 may further include a power supply (for example, a battery) for supplying power to the various components. The power supply may be logically connected to the processor 1310 by a power management system, thereby implementing functions such as charging, discharging, and power consumption management by means of a power management system. The terminal structure shown in FIG. 13 does not constitute a limitation on the terminal, and the terminal may include more or fewer components than shown, or combine some components, or have different component arrangements, and the details are omitted here.

It is to be understood that, in the embodiments of the present application, an input unit 1304 may include a graphics processing unit (Graphics Processing Unit, GPU) 13041 and a microphone 13042. The graphics processing unit 13041 performs processing on image data of a static picture or a video that is obtained by an image acquisition device (for example, a camera) in a video acquisition mode or an image acquisition mode. A display unit 1306 may include a display panel 13061 that may be configured in the form of a liquid crystal display, an organic light-emitting diode, etc. A user input unit 1307 includes a touch-control panel 13071 and another input device 13072 The touch-control panel 13071 is also referred to as a touchscreen. The touch-control panel 13071 may include two parts: a touch detection apparatus and a touch controller. The another input device 13072 may include, but is not limited to, a physical keyboard, a functional key (such as a volume control key or a switch key), a track ball, a mouse, and a joystick, which are not described herein in detail.

In the embodiments of the present application, after a radio frequency unit 1301 receives downlink data from a network side device is received, the downlink data is sent to a processor 1310 for processing. In addition, uplink data is sent to the network side device. Generally, the radio frequency unit 1301 includes, but is not limited to, an antenna, at least one amplifier, a transceiver, a coupler, a low noise amplifier, a duplexer, etc.

A memory 1309 may be configured to store a software program or instruction, and various data. The memory 1309 may mainly include a program or an instruction storage area and a data storage area. The program or instruction storage area may store an operating system, an application program or instruction required by at least one function (for example, a sound playback function and an image display function), etc. In addition, the memory 1309 may include a high speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. In addition, the memory may further include the non-volatile memory, such as at least one magnetic disk storage device, a flash memory or another non-volatile solid-state storage device.

The processor 1310 may include one or more processing units; and optionally, the processor 1310 may integrate an application processor and a modem processor. The application processor mainly processes an operating system, a user interface, an application program or instruction, etc., and the modem processor mainly processes wireless communication, such as a baseband processor. It can be understood that the above-mentioned modem processor may either not be integrated into the processor 1310.

The radio frequency unit 1301 may be configured to send an uplink channel or an uplink signal according to an uplink power.

The processor 1310 may be configured to determine the uplink power according to first information. The first information includes at least one of the following: the transmission direction of at least one subband on a first time unit; whether a guard band is present on the first time unit; a positional relationship between an uplink transmission resource and a downlink subband or a flexible subband; the position of the uplink transmission resource in the subband; and a power control parameter.

In the embodiments of the present application, a terminal determines an uplink power according to first information. The first information includes at least one of the following: the transmission direction of at least one subband on a first time unit; whether a guard band is present on the first time unit; a positional relationship between an uplink transmission resource and a downlink subband or a flexible subband; the position of the uplink transmission resource in the subband; and a power control parameter. In the embodiments of the present application, a transmission power can be determined according to the specific situation of a subband, which facilitates reducing the cross link interference in a system, thus improving the performance of a communication system.

The terminal 1300 provided in the embodiments of the present application may also implement various processes of the embodiments of the uplink power determination method, and the same technical effects can be achieved, which will not be described in detail herein again to avoid repetition.

A network side device is further provided in the embodiments of the present application, including a processor and a communication interface. The communication interface is configured to send configuration information; and the configuration information is used for configuring a power control parameter, the power control parameter is used for a terminal to determine an uplink power, and each subband or each subband set is configured with its own power control parameter. The network side device embodiment corresponds to the above-mentioned network side device method embodiment. Various implementation processes and implementation methods of the above-mentioned method embodiments can all be applied to the network side device embodiments, and the same technical effects can be achieved.

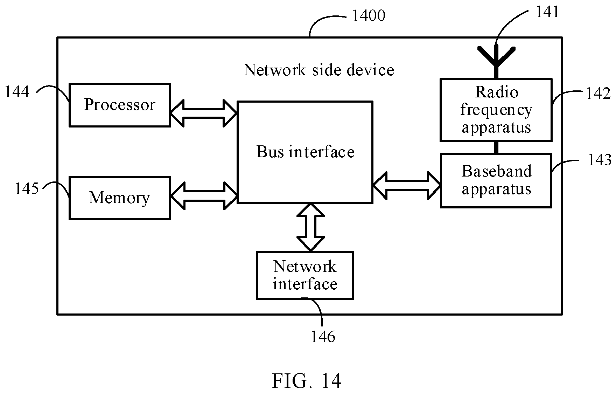

Specifically, a network side device is further provided in the embodiments of the present application. As shown in FIG. 14, the network side device 1400 includes: an antenna 141, a radio frequency apparatus 142 and a baseband apparatus 143. The antenna 141 is connected to the radio frequency apparatus 142. In the uplink direction, the radio frequency apparatus 142 receives information by means of the antenna 141, and sends the received information to the baseband apparatus 143 for processing. In the downlink direction, the baseband apparatus 143 processes information to be sent and sends same to the radio frequency apparatus 142, and the radio frequency apparatus 142 processes the received information and then sends the same by means of the antenna 141.

The above-mentioned frequency band processing apparatus may be located in the baseband apparatus 143. In the embodiments of the present application, the method executed by a network side device may be implemented in the baseband apparatus 143. The baseband apparatus 143 includes a processor 144 and a memory 145.

The baseband apparatus 143 includes at least one baseband board. The baseband board is provided with a plurality of chips. As shown in FIG. 14, one of the chips, such as a processor 144, is connected to a memory 145 so as to call a program in the memory 145, thus executing the operations of a network side device as shown in the above-mentioned method embodiment.

The baseband apparatus 143 may further include a network interface 146, which is configured to exchange information with the radio frequency apparatus 142. The interface may be a common public radio interface (common public radio interface, CPRI for short).

Specifically, a network side device in the embodiments of the present application further includes: an instruction or program which is stored in a memory 145 and executable on a processor 144. The processor 144 calls the instruction or the program in the memory 145 to execute the method, executed by various module, as shown in FIG. 11, and the same technical effects are achieved, which will not be described in detail herein again to avoid repetition.

A readable storage medium is further provided in the embodiments of the present application. The readable storage medium stores a program or instruction, the various processes of the embodiments of the uplink power determination method are implemented when the program or instruction is executed by a processor, and the same technical effects can be achieved, which will not be described in detail herein again to avoid repetition.

The processor may be a processor in the terminal in the embodiments. The readable storage medium includes a computer-readable storage medium, such as a read-only memory (Read-Only Memory, ROM), a random access memory (Random Access Memory, RAM), a magnetic disk, or an optical disc, etc.

A chip is further provided in the embodiments of the present application. The chip includes a processor and a communication interface, the communication interface is coupled to the processor, and the processor is configured to run a program or an instruction so as to implement the various processes of the embodiments of the uplink power determination method, and the same technical effects can be achieved, which will not be described in detail herein again to avoid repetition.

It is to be understood that a chip mentioned in the embodiments of the present application may also be referred to as a system-level chip, a system chip, a chip system or a system on chip, etc.

The terms "include", "comprise" or any other variation thereof in this specification is intended to cover a non-exclusive inclusion, such that processes, methods, objects, or apparatuses that include a series of elements not only include these elements, but also include other elements that are not specifically listed, or include elements that are fixed owned by the processes, methods, objects, or apparatuses. Without more limitations, elements defined by the sentence "including one" does not exclude that there are still other same elements in the processes, methods, objects, or apparatuses. In addition, it is to be pointed out that the range of the method and apparatus in the embodiments of the present application does not execute the functions in the shown or discussed sequence, and may also include executing functions, according to the relevant functions, in the basic simultaneous manner or in a reverse sequence. For example, the described method can be executed in a sequence different from the described sequence, and the various steps can be added, omitted or combined. In addition, the features described in certain examples may also be combined in other examples.

According to the descriptions in the foregoing implementations, a person skilled in the art may clearly learn that the method according to the foregoing embodiment may be implemented by relying on software and a commodity hardware platform or by using hardware. However, in many cases, the former one is the better implementation method. Based on such an understanding, the technical solutions of the present application essentially, or the part contributing to the prior art, may be presented in the form of a computer software product. The computer software product is stored in a storage medium (for example, a ROM/RAM, a magnetic disk, or an optical disc), including several instructions to enable a terminal device (which may be a mobile phone, a computer, a server, an air conditioner, or a network side device, etc.) to perform the method described in each embodiment of the present application.

The embodiments of the present application have been described above with reference to the accompanying drawings. However, the present application is not limited to the specific implementations described above, and the specific implementations described above are merely exemplary and not limitative. Those of ordinary skill in the art may make various variations under the teaching of the present application without departing from the spirit of the present application and the protection scope of the claims, and such variations shall all fall within the protection scope of the present application.

## Claims

1. An uplink power determination method, comprising:
determining, by a terminal, an uplink power according to first information; and
sending an uplink channel or an uplink signal according to the uplink power,
wherein the first information comprises at least one of following:
a transmission direction of at least one subband on a first time unit;
whether a guard band is present on the first time unit;
a positional relationship between an uplink transmission resource and a downlink subband or a flexible subband;
a position of the uplink transmission resource in a subband; and
a power control parameter.

2. The method according to claim 1, wherein the determining, by a terminal, an uplink power according to first information comprises:
if the first time unit comprises a downlink subband or a flexible subband, and/or the guard band is present on the first time unit, determining to use a second transmission power,
wherein the second transmission power is less than or equal to a first transmission power.

3. The method according to claim 1, wherein the determining, by a terminal, an uplink power according to first information comprises:
if a frequency interval between a subband in which the uplink transmission resource is located and a downlink subband or a flexible subband is less than or equal to a preset frequency threshold, determining to use a third transmission power,
wherein the third transmission power is less than or equal to a first transmission power.

4. The method according to claim 3, wherein the frequency interval comprises one of following:
at least one sub-carrier, at least one resource block, at least one subband, and an absolute frequency width.

5. The method according to claim 1, wherein the determining, by a terminal, an uplink power according to first information comprises:
if the uplink transmission resource comprises at least one resource block of an edge of a subband or at least one resource element of the edge of a subband, determining to use a fourth transmission power,
wherein the fourth transmission power is less than or equal to a first transmission power.

6. The method according to any one of claims 2 to 5, wherein the first transmission power comprises at least one of following:
a transmission power when all subbands on the first time unit are uplink subbands or flexible subbands;
a transmission power when no downlink subband or guard band exist on the first time unit;
a transmission power when the first time unit is an uplink time unit; and
a transmission power determined according to a power control parameter configured by an uplink bandwidth part (BWP).

7. The method according to claim 6, wherein a difference between at least one of the second transmission power, the third transmission power and the fourth transmission power and the first transmission power is determined based on at least one of following:
a preset value or a preset value range;
a value configured or indicated by a network side device;
a value determined according to quantity and/or position of downlink subbands or the flexible subbands; and
a value determined according to a size of the guard band.

8. The method according to any one of claims 1-5, wherein the power control parameter comprises at least one of following:
a maximum transmission power;
a target receiving power of an open loop power control parameter;
a path loss compensation factor;
a path loss reference signal; and
a power adjustment value.

9. The method according to claim 8, wherein before the determining, by a terminal, an uplink power according to first information, the method further comprises:
receiving configuration information, wherein
the configuration information is used for configuring the power control parameter, and each subband or each subband set is configured with its own power control parameter.

10. The method according to any one of claims 1-5, wherein
the uplink channel comprises one of following: a physical random access channel (PRACH), a physical uplink control channel (PUCCH), and a physical uplink shared channel (PUSCH);
and the uplink signal comprises a sounding reference signal (SRS).

11. An uplink power determination method, comprising:
a network side device sending configuration information, wherein
the configuration information is used for configuring a power control parameter, the power control parameter is used for a terminal to determine an uplink power, and each subband or each subband set is configured with its own power control parameter.

12. The method according to claim 11, wherein the power control parameter comprises at least one of following:
a maximum transmission power;
a target receiving power of an open loop power control parameter;
a path loss compensation factor;
a path loss reference signal; and
a power adjustment value.

13. An uplink power determination apparatus, comprising:
a power determination module, configured to determine an uplink power according to first information; and
a transmission module, configured to send an uplink channel or an uplink signal according to the uplink power,
wherein the first information comprises at least one of following:
a transmission direction of at least one subband on a first time unit;
whether a guard band is present on the first time unit;
a positional relationship between an uplink transmission resource and a downlink subband or a flexible subband;
a position of the uplink transmission resource in a subband; and
a power control parameter.

14. The apparatus according to claim 13, wherein the power determination module is configured to
if the first time unit comprises a downlink subband or a flexible subband, and/or the guard band is present on the first time unit, determine to use a second transmission power.
wherein the second transmission power is less than or equal to a first transmission power.

15. The apparatus according to claim 13, wherein the power determination module is configured to
if a frequency interval between a subband in which the uplink transmission resource is located and a downlink subband or a flexible subband is less than or equal to a preset frequency threshold, determine to use a third transmission power,
wherein the third transmission power is less than or equal to a first transmission power.

16. The apparatus according to claim 15, wherein the frequency interval comprises one of following:
at least one sub-carrier, at least one resource block, at least one subband, and an absolute frequency width.

17. The apparatus according to claim 13, wherein the power determination module is configured to
if the uplink transmission resource comprises at least one resource block of an edge of a subband or at least one resource element of the edge of a subband, determine to use a fourth transmission power,
wherein the fourth transmission power is less than or equal to a first transmission power.

18. The apparatus according to any one of claims 14 to 17, wherein the first transmission power comprises at least one of following:
a transmission power when all subbands on the first time unit are uplink subbands or flexible subbands;
a transmission power when no downlink subband or guard band exist on the first time unit;
a transmission power when the first time unit is an uplink time unit; and
a transmission power determined according to a power control parameter configured by an uplink bandwidth part (BWP).

19. The apparatus according to claim 18, wherein a difference between at least one of the second transmission power, the third transmission power and the fourth transmission power and the first transmission power is determined based on at least one of following:
a preset value or a preset value range;
a value configured or indicated by a network side device;
a value determined according to quantity and/or position of downlink subbands or the flexible subbands; and
a value determined according to a size of the guard band.

20. The apparatus according to any one of claims 13-17, wherein the power control parameter comprises at least one of following:
a maximum transmission power;
a target receiving power of an open loop power control parameter;
a path loss compensation factor;
a path loss reference signal; and
a power adjustment value.

21. The apparatus according to claim 20, wherein the transmission module is further configured to
receive configuration information, wherein
the configuration information is used for configuring the power control parameter, and each subband or each subband set is configured with its own power control parameter.

22. The apparatus according to any one of claims 13-17, wherein
the uplink channel comprises one of following: an PRACH, a PUCCH, and a PUSCH; and the uplink signal comprises an SRS.

23. An uplink power determination apparatus, comprising:
a transmission module, configured to send configuration information, wherein
the configuration information is used for configuring a power control parameter, the power control parameter is used for a terminal to determine an uplink power, and each subband or each subband set is configured with its own power control parameter.

24. The apparatus according to claim 23, wherein the power control parameter comprises at least one of following:
a maximum transmission power;
a target receiving power of an open loop power control parameter;
a path loss compensation factor;
a path loss reference signal; and
a power adjustment value.

25. A terminal, wherein the terminal comprises a processor, a memory, and a program or an instruction that is stored in the memory and executable on the processor, wherein when the program or the instruction is executed by the processor, the uplink power determination method according to any one of claims 1 to 10 is implemented.

26. A network side device, wherein the network side device comprises a processor, a memory, and a program or an instruction that is stored in the memory and executable on the processor, wherein when the program or the instruction is executed by the processor, the uplink power determination method according to any one of claims 11 to 12 is implemented.

27. A readable storage medium, wherein the readable storage medium stores a program or an instruction, and when the program or the instruction is executed by a processor, the uplink power determination method according to any one of claims 1 to 10 is implemented, or the uplink power determination method according to any one of claims 11 to 12 is implemented.

28. A chip, comprising a processor and a communication interface, wherein the communication interface is coupled to the processor, and the processor is configured to run a program or an instruction to implement the uplink power determination method according to any one of claims 1 to 10, or implement the uplink power determination method according to any one of claims 11 to 12.

29. A computer program/program product, wherein the computer program/program product is stored in a non-transitory storage medium, and when the program/program product is executed by at least one processor, the uplink power determination method according to any one of claims 1 to 10 is implemented, or the uplink power determination method according to any one of claims 11 to 12 is implemented.
